# EUROPEAN PATENT APPLICATION

(11) **EP 2 821 382 A1**
(43) Date of publication of application: **07.01.2015**
(21) Application number: 13755825.0
(22) Date of filing: 26.02.2013
(51) Int. Cl.: C04B 41/89, F01L 3/02, F02F 1/24, F02F 3/00, F16J 1/01

(54) **HEAT-INSULATING MEMBER AND ENGINE COMBUSTION CHAMBER STRUCTURE**

(30) Priority: 27.02.2012 JP 2012040438
(71) Applicant: NGK Insulators, Ltd., Nagoya-shi, Aichi 467-8530 (JP)
(72) Inventor: TOMITA, Takahiro, Nagoya-shi Aichi 467-8530 (JP); ICHIMURA, Mikiya, Nagoya-shi Aichi 467-8530 (JP); HASHIMOTO, Shigeharu, Yokohama-shi Kanagawa 224-0007 (JP)
(74) Representative: Teipel, Stephan
(86) International application number: PCT/JP2013/055021
(87) International publication number: WO 2013/129430

(57) **Abstract**

There are provided a heat-insulating member which enhances a thermal efficiency of an engine to enhance fuel efficiency, and a structure of a combustion chamber for the engine. A heat-insulating member 1 includes a substrate 5, an insulating porous layer 3, and a surface dense layer 2. The substrate 5, the insulating porous layer 3 and the surface dense layer 2 are formed of a ceramic material. The surface dense layer 2 has a porosity of 5% or less. Furthermore, the insulating porous layer 3 has a larger porosity than the surface dense layer 2. The substrate 5 sufficiently has a mechanical strength to exist in a self-supported manner. The heat-insulating member 1 is fixed to a piston 14 by mechanical fixing such as screwing or chemical fixing such as brazing.

## Description

### Technical Field

The present invention relates to a heat-insulating member which enhances a thermal efficiency of an engine to enhance fuel efficiency, and a structure of a combustion chamber for the engine. In particular, it relates to a heat-insulating member focused on heat transfer by radiation from combustion flame of a fuel to an inner wall constituting a combustion chamber for an engine, and a structure of the combustion chamber for the engine.

### Background Art

It has been desired that a thermal efficiency of an engine is enhanced to enhance fuel efficiency. In Patent Document 1, an object is to supply a film for use in a combustion chamber of an engine, which has a low heat conduction and a low heat capacity, and does not cause peeling, falling or the like, so that the film has an excellent durability and reliability. In Patent Document 1, for the enhancement of the thermal efficiency of the engine, an anode oxide coating film having a film thickness which is larger than 20 µm and 500 µm or less and having a porosity of 20% or more is formed on an inner wall constituting the engine combustion chamber.

In Patent Document 2, an object is to provide an internal combustion engine including a structure member in which has an enhanced heat insulation performance. In the internal combustion engine of Patent Document 2, an insulating material is disposed adjacent to an inner wall of an exhaust passage, and a high-temperature operation gas (an exhaust gas) flows along a flow path formed by the insulating material. In the insulating material, respective spherical mesoporous silica particles having an average particle diameter of 0.1 to 3 µm are laminated in a dense state via a bonding material. Mesopores having an average pore diameter of 1 to 10 nm are countlessly formed in the spherical mesoporous silica particles.

In Patent Document 3, it is described that a piston head portion is made of a ceramic material and that enhancement of an engine performance is achieved.

### Citation List

### Patent Documents

[Patent Document 1] JP-A-2010-249008
[Patent Document 2] JP-A-2011-52630
[Patent Document 3] JP-A-S63-230947

### Summary of the Invention

### Problem to be Solved by the Invention

In each of technologies of Patent Documents 1 and 2, for enhancement of a thermal efficiency of an engine, a porous material is formed on an inner wall of an engine combustion chamber, in an attempt to realize a low heat conductivity and a low heat capacity. However, when the inner wall of the engine combustion chamber is porous, radiated heat conduction from combustion flame cannot be inhibited (disadvantageously permeates), which causes the fear that heat easily transfers to an engine constituting member. Furthermore, especially in the case of a direct injection engine, a fuel injected into the engine combustion chamber is absorbed by the porous inner wall, and a combustion reaction may not normally take place. In Patent Document 1, there is the possibility that pores are clogged by the fuel.

Furthermore, when the inner wall of the combustion chamber is porous, there is the possibility that a very small amount of soot and cinders of impurities in the fuel which are generated after combustion easily adhere, and there is a fear that properties of an insulating porous layer change to heighten the heat conductivity and the heat capacity. In Patent Document 1, description is made concerning closing the open portions of pores in a dense layer in the topmost surface of an anode oxide coating film. However, it is described that from the viewpoints of low heat transfer properties and low volume heat capacity, the dense layer is preferably thin, and a difference in thermal characteristics is not recognized even when the open portions are closed.

Furthermore, in each of the technologies of Patent Documents 1 and 2, a film having high insulating properties is formed to inhibit heat from escaping into the engine constituting member after the heat of a combustion gas transfers to the topmost surface of the inner wall of the engine combustion chamber. However, when the heat of the combustion gas is inhibited from being transferred to the topmost surface of the inner wall of the engine combustion chamber, much attention is not paid to the heat transfer by the radiation from the combustion flame to the topmost surface of the inner wall. Furthermore, a type of material of the topmost surface of the inner wall of the engine combustion chamber is different from that of the film formed thereon, and hence peeling properties become a problem.

On the other hand, in Patent Document 3, a ceramic piston head is mechanically fixed, but it does not have a function for the enhancement of the thermal efficiency, for example, a low heat conductivity or the like.

A problem of the present invention is to provide a heat-insulating member which enhances a thermal efficiency of an engine to enhance fuel efficiency, and a structure of a combustion chamber for an engine.

### Means for Solving the Problem

The present inventors have found that a heat-insulating member can solve the above problem by including a substrate, a surface dense layer having a porosity of 5% or less, and an insulating porous layer having a larger porosity than the surface dense layer. That is, according to the present invention, there are provided the following heat-insulating member, and the following structure of a combustion chamber for an engine.
[1] A heat-insulating member including a substrate formed of a ceramic material, an insulating porous layer formed of a ceramic material on the surface of the substrate, and a surface dense layer formed of a ceramic material on the surface of the insulating porous layer, wherein the surface dense layer has a porosity of 5% or less, and the insulating porous layer has a larger porosity than the surface dense layer.
[2] The heat-insulating member according to the above [1], wherein the insulating porous layer and the substrate are formed of the ceramic material of a same composition or a similar composition.
[3] The heat-insulating member according to the above [1] or [2], wherein the insulating porous layer has pores of sizes of a nano-order.
[4] The heat-insulating member according to any one of the above [1] to [3], wherein in the surface dense layer, a reflectance at a wavelength of 1.5 µm is larger than 0.5.
[5] The heat-insulating member according to any one of the above [1] to [4], wherein in the surface dense layer, a radiation rate at a wavelength of 2.5 µm is larger than 0.5.
[6] The heat-insulating member according to any one of the above [1] to [5], wherein the surface dense layer has a thickness of 20 µm or less.
[7] The heat-insulating member according to any one of the above [1] to [6], wherein the insulating porous layer has a heat conductivity of 1 W/(m·K) or less.
[8] The heat-insulating member according to any one of the above [1] to [7], wherein the insulating porous layer has a heat capacity of 2000 kJ/(m³·K) or less.
[9] The heat-insulating member according to any one of the above [1] to [8], wherein the insulating porous layer has a thickness of 10 µm to 1 mm.
[10] The heat-insulating member according to any one of the above [1] to [9], wherein the substrate has a thickness of 1 to 30 mm.
[11] The heat-insulating member according to any one of the above [1] to [10], wherein the substrate has a four-point bending strength of 20 MPa or more.
[12] The heat-insulating member according to any one of the above [1] to [11], which has a first bonding layer between the insulating porous layer and the surface dense layer.
[13] The heat-insulating member according to any one of the above [1] to [12], which has a second bonding layer between the substrate and the insulating porous layer.
[14] A structure of a combustion chamber for an engine, including the heat-insulating member according to any one of the above [1] to [13] on the surface of an engine constituting member constituting the engine combustion chamber.
[15] The structure of the combustion chamber for the engine according to the above [14], wherein the heat-insulating member is provided on the surface of at least one of a piston, a valve head, and a cylinder head.
[16] The structure of the combustion chamber for the engine according to the above [14] or [15], wherein the heat-insulating member is fixed to the surface of the engine constituting member constituting the engine combustion chamber by mechanical fixing or chemical fixing.
[17] The structure of the combustion chamber for the engine according to the above [16], wherein the mechanical fixing is screwing or fitting.
[18] The structure of the combustion chamber for the engine according to the above [16], wherein the chemical fixing is brazing.

### Effect of the Invention

By using a heat-insulating member including the substrate, the surface dense layer and the insulating porous layer in an engine combustion chamber, insulating performance of the engine combustion chamber can be enhanced to enhance fuel efficiency. Since the surface dense layer and the insulating porous layer are formed on the substrate, a membrane forming process can be performed at a high temperature. Furthermore, the surface dense layer and the insulating porous layer are supported by the substrate, and hence it is easy to attach the heat-insulating member to the engine combustion chamber.

The surface dense layer is a dense layer having a porosity of 5% or less, thus it is possible to reflect radiation and to inhibit absorption of fuel or adhesion of cinders. The insulating porous layer having pores is deposited under the surface dense layer, so that it is possible to inhibit heat transfer to the engine constituting member. Therefore, a durability of the engine constituting member constituting the engine combustion chamber is also enhanced.

### Brief Description of the Drawings

Fig. 1 is a schematic view showing a heat-insulating member including a surface dense layer and an insulating porous layer;
Fig. 2 is a schematic view showing one embodiment of an engine;
Fig. 3 is a diagram showing a gas temperature of an engine combustion chamber and a temperature of an inner wall;
Fig. 4A is a view showing an embodiment in which the heat-insulating member is fixed to a piston by screwing; and
Fig. 4B is a view showing another embodiment in which a heat-insulating member is fixed to a piston by screwing.

### Mode for Carrying out the Invention

Hereinafter, modes for carrying out the present invention will be described with reference to the drawings. The present invention is not limited to the following embodiments, and changes, modifications and improvements can be added without departing from the gist of the invention.

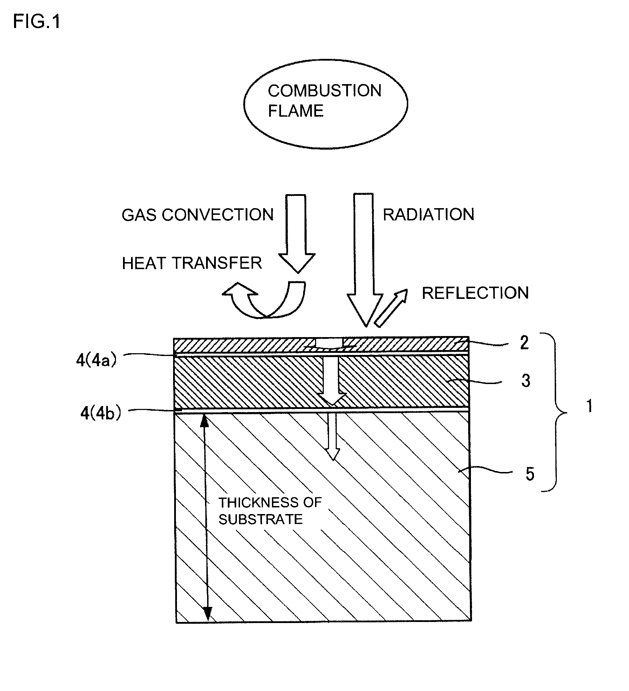

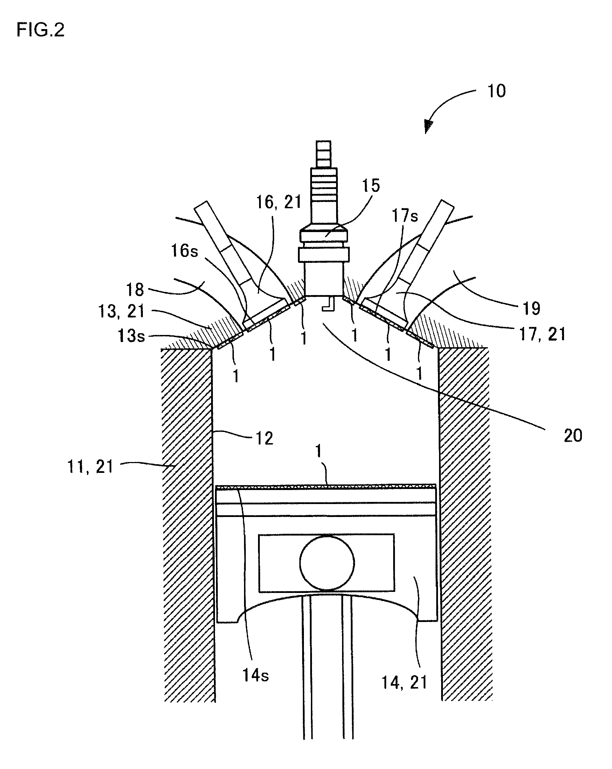

A heat-insulating member 1 and a structure of a combustion chamber for an engine of the present invention will be described with reference to Fig. 1 and Fig. 2. As shown in Fig. 1, the heat-insulating member 1 includes a substrate 5 formed of a ceramic material, an insulating porous layer 3 formed of a ceramic material on the surface of the substrate 5, and a surface dense layer 2 formed of a ceramic material on the surface of the insulating porous layer 3. The surface dense layer 2 has a porosity of 5% or less. Furthermore, the insulating porous layer 3 has a larger porosity than the surface dense layer 2.

As shown in Fig. 1, bonding layers 4 are layers interposed between the surface dense layer 2 and the insulating porous layer 3 and between the substrate 5 and the insulating porous layer 3 to bond the respective layers. That is, the heat-insulating member has a first bonding layer 4a between the insulating porous layer 3 and the surface dense layer 2. Furthermore, the heat-insulating member has a second bonding layer 4b between the substrate 5 and the insulating porous layer 3. It is to be noted that the heat-insulating member can be constituted so that no bonding layer 4 is deposited.

The structure of the engine combustion chamber of the present invention includes the heat-insulating member 1 on the surface of at least one of a piston 14, valve heads 16s and 17s, and a cylinder head 13.

The heat-insulating member 1 includes two layers of the dense surface dense layer 2 and the porous insulating porous layer 3 under the surface dense layer 2, which can enhance an insulating performance of an engine combustion chamber 20. During combustion of fuel in the engine combustion chamber 20, radiation can be reflected by the surface dense layer 2, and during exhaust, heat can be radiated from the surface dense layer 2. Furthermore, the insulating porous layer 3 can inhibit heat transfer from the surface dense layer 2 to the engine constituting member 21. Therefore, during the combustion of the fuel, a temperature of an inner wall of the engine constituting member 21 (a wall surface constituting the engine combustion chamber 20) follows the gas temperature of the engine combustion chamber 20 and easily rises.

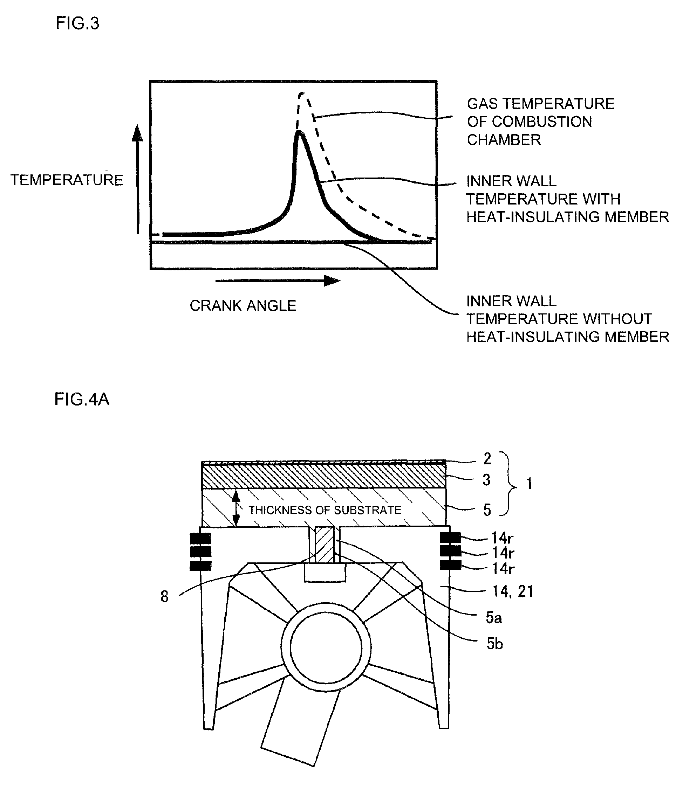

Fig. 3 is a diagram showing the gas temperature of the engine combustion chamber 20 and the temperature of the inner wall of the engine constituting member 21. The abscissa indicates a crank angle of an engine 10, and corresponds to time. The ordinate indicates the temperature. The temperature of the inner wall which does not include the heat-insulating member 1 noticeably deviates from the gas temperature of the engine combustion chamber 20. On the other hand, the temperature of the inner wall provided with the heat-insulating member 1 follows the gas temperature of the engine combustion chamber 20 and easily rises. In this way, when the temperature of the inner wall easily follows the gas temperature of the engine combustion chamber 20, a heat loss can be reduced. Moreover, superheating of intake air can be prevented. Hereinafter, description will be made in more detail.

### (Substrate)

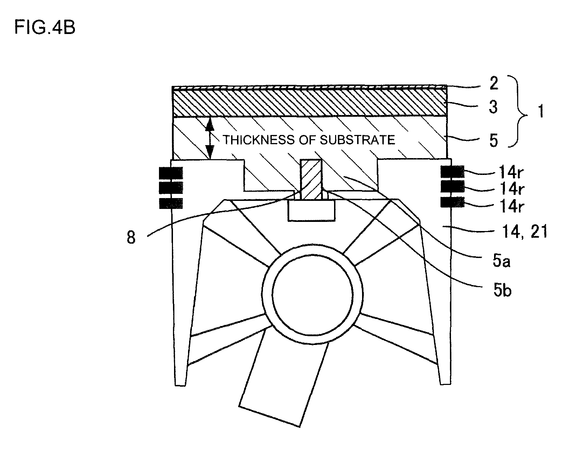

The substrate 5 is a support supporting the surface dense layer 2 and the insulating porous layer 3. The substrate 5 preferably has a thickness (a thickness of a portion having a planar spread, see Figs. 1, 4A, and 4B) of from 1 to 30 mm. When the thickness is of this extent, a strength can sufficiently be acquired as a support substrate, and the insulating porous layer 3 and the surface dense layer 2 are easily formed onto the substrate 5. Specifically, the substrate 5 preferably has a four-point bending strength (JIS R1601) of 20 MPa or more. That is, the substrate 5 sufficiently has a mechanical strength to exist in a self-supported manner.

The substrate 5 can be formed of a ceramic material, and examples of the ceramic material include zirconia, alumina, silica, mullite, spinel, cordierite, aluminum titanate, titania, silicon nitride, silicon carbide, zinc oxide, and glass.

The substrate 5 can be manufactured by using a pressing method, an injection method, a casting method, an extrusion method or the like which is known as a forming method of ceramic materials. In particular, when the substrate is manufactured by using a gel casting method, the substrate can be formed into a shape matched with the shape of the piston 14 or the like which is to be bonded thereto. Alternatively, the substrate may be manufactured by processing it into a predetermined shape after the forming (not fired) or after the firing.

The insulating porous layer 3 and the substrate 5 are preferably formed of ceramic material which has the same composition or a similar composition. Here, "the same or similar composition" means that "there is not a difference in excess of 5 at% when the presence ratio of a constituent element is represented by an atomic composition percentage". For example, description will be made regarding a case where the substrate 5 is made of silicon carbide and the presence ratio of an Si atom and a C atom as main components and an O atom as a sub-component is "Si:C:O = 50 at%:50 at%:0 at%". In this case, when a ratio of constituent elements of the insulating porous layer 3 is "Si:C:O = 50 at%:47 at%:3 at%" or "Si:C:O = 50 at%:45 at%:5 at%", it can be considered that the ceramic material has a similar composition. On the other hand, when "Si:C:O = 50 at%:43 at%:7 at%", it cannot be considered that the ceramic material has a similar composition. The insulating porous layer 3 and the substrate 5 are made of the ceramic material of the same or similar composition, so that peeling of the insulating porous layer 3 can be inhibited. Furthermore, it is possible to avoid the peeling due to mismatch of thermal expansion.

### (Insulating Porous Layer)

Next, the insulating porous layer 3 will be described. The insulating porous layer 3 is a porous ceramic layer, and has a larger porosity than the surface dense layer 2. The porosity of the insulating porous layer 3 is preferably from 10 to 99%, and more preferably from 20 to 90%. By this, it is possible to inhibit heat conduction from the surface dense layer 2 to the engine constituting member 21.

The insulating porous layer 3 preferably has pores of sizes of a nano-order. Here, "the pores of sizes of nano-order" mean pores in which pore diameters are 0.1 nm or more and 500 nm or less. When the insulating porous layer 3 is a porous layer having pores of nano-order, the heat conductivity is low and the heat capacity is also low.

In the insulating porous layer 3, the heat conductivity is preferably 1 W/(m·K) or less, further preferably 0.5 W/(m·K) or less, and most preferably 0.1 W/(m·K) or less. Due to the low heat conductivity, it is possible to inhibit the heat transfer from the surface dense layer 2 to the engine constituting member 21.

In the insulating porous layer 3, the heat capacity is preferably 2000 kJ/(m³·K) or less, further preferably 1000 kJ/(m³·K) or less, and most preferably 100 kJ/(m³·K) or less. Due to the low heat capacity, it is possible to easily lower the gas temperature in the engine combustion chamber 20 after exhaust of the fuel. In consequence, it is possible to enhance a compression ratio of the engine.

In the insulating porous layer 3, Young's modulus is preferably 50 GPa or less. With the low Young's modulus, it is possible to alleviate heat stress or heat shock due to the mismatch of the thermal expansion between the engine constituting member 21 and the surface dense layer 2.

In the insulating porous layer 3, a thickness is preferably from 10 µm to 1 mm. When the insulating porous layer 3 is in this range, a sufficient insulating effect can be obtained.

The insulating porous layer 3 is made of ceramic material, and for example, zirconia, alumina, silica, mullite, spinel, cordierite, aluminum titanate, titania, silicon nitride, silicon carbide, zinc oxide, glass or the like can be used. These materials are preferably amorphous from the viewpoint of the heat conductivity. Furthermore, the insulating porous layer may be constituted of one of these materials or may be a mixture of at least two or more of the materials. An example of the mixture is a composite material in which silica alumina fibers and hollow silica-alumina particles are dispersed in a matrix of silica.

Furthermore, the insulating porous layer 3 may be doped with a heavy metal element, defects in a crystal structure may be introduced into the insulating porous layer, or a lot of grain boundaries in which grain sizes are nano-sizes may be allowed to exist in the insulating porous layer, so that it is possible to further lower the heat conductivity.

### (Surface Dense Layer)

The surface dense layer 2 is a dense ceramic layer formed on the surface of the insulating porous layer 3 with a porous structure. In the surface dense layer 2, a porosity is 5% or less, preferably from 0.01 to 4%, and further preferably from 0.01 to 3%. By this, it is possible to prevent the heat conduction due to convection of the gas (the fuel) during the combustion of fuel. Furthermore, since the layer is dense, fuel is not easily absorbed, and soot and cinders are not easily adhered.

The surface dense layer 2 is constituted of a material which inhibits the radiation heat transfer from combustion flame as a heat source during combustion of the fuel. Furthermore, the surface dense layer 2 preferably easily radiates its own heat during the exhaust of the fuel. For this purpose, it is preferable to control a reflectance and a radiation rate in a wavelength region predicted from Wien's displacement law (λₘT = 2898 [µm·K] where λₘ is a wavelength indicating a maximum radiation strength, and T indicates a temperature). That is, the reflectance is preferably large at a wavelength smaller than 2 µm, and the radiation rate is preferably large at a wavelength larger than 2 µm. In consequence, it is possible to inhibit the radiation heat transfer to the inner wall constituting the engine combustion chamber 20 in the earlier stage of the combustion immediately after the start of the combustion. Furthermore, when the temperature lowers in the later stage of the combustion to an exhaust step, the heat is radiated from the surface dense layer 2 to the exhaust gas, so that an intake gas to be next introduced can be prevented from reaching a high temperature.

In the surface dense layer 2, a reflectance at a wavelength of 1.5 µm is preferably larger than 0.5, a reflectance at a wavelength of 1 µm to 2 µm is more preferably larger than 0.5, and the reflectance at the wavelength of 1 µm to 2 µm is further preferably larger than 0.6. In the surface dense layer 2, a radiation rate at a wavelength of 2.5 µm is preferably larger than 0.5, more preferably larger than 0.6, and further preferably larger than 0.7. When the surface dense layer has such a reflectance, it is possible to inhibit the conduction of the heat to the insulating porous layer 3. Furthermore, when the surface dense layer 2 has such a radiation rate, the heated surface dense layer can easily be cooled down.

In the surface dense layer 2, a heat capacity is preferably 3000 kJ/(m³·K) or less and more preferably 1000 kJ/(m³·K) or less. Due to the low heat capacity (thin membrane, small volume), the temperature of the inner wall of each engine constituting member easily follows the gas temperature in the engine combustion chamber 20. The temperature difference between the gas temperature and the heat-insulating member 1 (the surface dense layer 2) becomes small, then cooling loss can be reduced.

In the surface dense layer 2, a heat conductivity is preferably 3 W/(m·K) or less. When the heat conductivity is in this range, it is possible to inhibit the conduction of the heat to the insulating porous layer 3.

In the surface dense layer 2, a thickness is preferably 20 µm or less. When the thickness is in this range, the temperature of the inner wall of each of the engine constituting members 21 (the wall surface constituting the engine combustion chamber 20) easily follows the gas temperature of the engine combustion chamber 20.

The surface dense layer 2 can be formed of the ceramic material, and examples of the ceramic material include zirconia, alumina, silica, mullite, spinel, cordierite, aluminum titanate, titania, silicon nitride, silicon carbide, zinc oxide, and glass. Furthermore, the surface dense layer may be constituted of one of these materials or may be a mixture of two or more of the materials.

Furthermore, the surface dense layer 2 may be doped with a heavy metal element, defects in a crystal structure may be introduced into the surface dense layer, or a lot of grain boundaries in which grain sizes are nano-sizes may be allowed to exist in the surface dense layer, so that it is possible to further lower the heat conductivity.

### (Bonding Layer)

The surface dense layer 2 may be constituted to be bonded directly to the insulating porous layer 3, but as shown in Fig. 1, the constitution may have the bonding layer 4 (the first bonding layer 4a) between the surface dense layer 2 and the insulating porous layer 3. Furthermore, the constitution may have the bonding layer 4 (the second bonding layer 4b) between the substrate 5 and the insulating porous layer 3.

In the bonding layer 4, a heat resistance is preferably high, and specifically, the heat resistance is preferably from 10⁻⁶ to 10 m²K/W, more preferably from 10⁻⁵ to 10 m²K/W, and further preferably from 10⁻⁴ to 10 m²K/W. When the bonding layer 4 is formed, the insulating effect can further sufficiently be obtained. Furthermore, the bonding layer 4 is formed, so that the mismatch of the thermal expansion of a body to be bonded can be buffered, and a heat shock resistance and a heat stress resistance can be enhanced. For this purpose, as to a thermal expansion coefficient of the bonding layer 4, the bonding layer preferably has an intermediate thermal expansion coefficient between the respective layers in contact (the first bonding layer 4a in contact with the surface dense layer 2 and the insulating porous layer 3, and the second bonding layer 4b in contact with the insulating porous layer 3 and the substrate 5). Furthermore, as to the Young's modulus of the bonding layer 4, the bonding layer preferably has an intermediate Young's modulus between the respective layers in contact. Furthermore, the bonding layer 4 is preferably made of such a material composition as to inhibit a mutual reaction of the respective layers in contact, so that an oxidation resistance and a reaction resistance enhance, and a durability of the heat-insulating member enhances.

The bonding layer 4 is preferably made of a material having a bonding function or a material which can be formed as a thin membrane, and examples of the material include an inorganic adhesive, a colloidal solution, a pre-ceramic polymer, a brazing material, and a plating membrane.

### (Arrangement of Heat-Insulating Members)

Next, an arrangement of the heat-insulating members 1 will be described. The heat-insulating members 1 are disposed on the surfaces (the inner walls) of the engine constituting members 21 constituting the engine combustion chamber 20. Specifically, examples of the surfaces include an upper surface 14s of the piston 14, the valve heads 16s and 17s of a suction valve 16 and an exhaust valve 17, and a bottom surface 13s of the cylinder head 13.

Fig. 2 shows one embodiment of an engine. The engine 10 has a cylinder block 11 in which a cylinder 12 is formed, and the cylinder head 13 attached to cover the upper surface of the cylinder block 11. In the cylinder 12 of the cylinder block 11, the piston 14 is disposed slidably in an upward-downward direction.

An ignition plug 15 is installed to the cylinder head 13. Furthermore, the suction valve 16 and the exhaust valve 17 are installed, so that the suction valve 16 is constituted to open and close a suction passage 18 formed in the cylinder head 13, and the exhaust valve 17 is constituted to open and close an exhaust passage 19 formed in the cylinder head 13.

As shown in Fig. 2, the heat-insulating member 1 is disposed on the upper surface 14s of the piston 14. In this case, the substrate 5 is the piston head. Furthermore, the heat-insulating members 1 are similarly disposed on the valve heads 16s and 17s of the suction valve 16 and the exhaust valve 17 and the bottom surface 13s of the cylinder head 13. These surfaces form the engine combustion chamber 20, and these surfaces are provided with the heat-insulating members 1, so that the insulating performance is enhanced.

The suction valve 16 is opened to supply the fuel into the engine combustion chamber 20 surrounded by the cylinder 12, the cylinder head 13 and the piston 14, and the fuel is ignited by the ignition plug 15 and then combusted. By this combustion, the piston 14 is pressed downward. The exhaust gas generated by the combustion is exhausted by opening the exhaust valve 17.

The heat-insulating members 1 can be fixed to the surfaces of the engine constituting members 21 constituting the engine combustion chamber 20 by mechanical fixing or chemical fixing. Examples of the mechanical fixing include screwing and fitting. When the mechanical fixing is employed, the heat-insulating members 1 are not easily removed, and have durability. An example of the chemical fixing is brazing in which a brazing material is used. When the chemical fixing is employed, it is not necessary to form a screw hole in the substrate 5, which facilitates the fixing. Alternatively, the substrate 5 may be prepared together with the piston and the like by casting.

Fig. 4A shows an embodiment in which a heat-insulating member 1 is fixed to a piston 14 by screwing. When the heat-insulating member 1 is fixed to an upper surface 14s of the piston 14, the substrate 5 is a piston head. In the embodiment shown in Fig. 4A, the substrate 5 (the piston head) is formed into a disc shape having a concave portion 5a in the center thereof. Furthermore, a screw hole 5b is formed in the concave portion 5a. It is to be noted that the thickness of the substrate of the present embodiment is the thickness of the portion having a planar spread as shown in Fig. 4A.

As shown in Fig. 4A, the heat-insulating member 1 is mounted on the upper surface 14s of the piston 14, and a screw 8 is inserted into the screw hole 5b of the concave portion 5a from back side of the upper portion of the piston, so that the heat-insulating member 1 can be fixed to the upper surface 14s of the piston 14. When the heat-insulating member 1 is fixed to the upper surface 14s of the piston 14, the heat-insulating member 1 is positioned above piston rings 14r. Therefore, the heat-insulating member 1 does not come in contact with the cylinder 12, and it is not necessary to take friction and the like into consideration. Therefore, there is only little restriction on roundness or dimensional accuracy.

Fig. 4B shows another embodiment in which a heat-insulating member 1 is fixed to a piston 14 by screwing. A concave portion 5a is formed in two stages, and a root portion of the concave portion 5a is formed to be thicker than a side into which a screw is inserted. That is, in the present embodiment, a strength of the concave portion 5a is enhanced, and a screw fastened portion is strengthened.

### (Manufacturing Method)

Next, a manufacturing method of the heat-insulating member 1 will be described. First, the substrate 5 is prepared. A slurry including a ceramic raw material is prepared, formed into a disc-like or plate-like shape, and fired to obtain the substrate 5.

As to the surface dense layer 2 and the insulating porous layer 3, the insulating porous layer 3 may first be formed on the substrate 5, and then the surface dense layer 2 may be formed. Alternatively, the layers may simultaneously be formed.

The insulating porous layer 3 can be formed on the substrate 5 by use of a porous membrane forming method such as an EB-PVD method, a thermal spraying method, a CVD method, or a heat treatment after wet coating. Furthermore, there may be used a method of forming a porous membrane in which particles are deposited by electrophoretic deposition, advection accumulation or the like and then subjected to heat treatment. Alternatively, a porous thin plate may separately be prepared and attached to the substrate 5 by a bonding material. Furthermore, filler particles (preferably hollow or porous) and a pore former are added to a bonding agent and kneaded to obtain a paste, and the paste may be applied and hardened, or subjected to the heat treatment to form the insulating porous layer 3. Since the insulating porous layer 3 is formed on the substrate 5, a firing temperature can be heightened. Therefore, the range of a material composition for the insulating porous layer 3 is broad.

On the formed insulating porous layer 3, the surface dense layer 2 can be formed by a sputtering method, a PVD method, an EB-PVD method, a CVD method, an AD method, thermal spraying, a plasma spraying method, a cold spraying method, plating, a heat treatment after wet coating, or the like. Furthermore, a dense thin plate may separately be prepared as the surface dense layer 2, and attached to the substrate 5 together with the insulating porous layer 3.

The heat-insulating member can be constituted to have the first bonding layer 4a between the insulating porous layer 3 and the surface dense layer 2, and have the second bonding layer 4b between the substrate 5 and the insulating porous layer 3. When the bonding layers 4 (the first bonding layer 4a and the second bonding layer 4b) are deposited in this manner, the second bonding layer 4b is formed on the substrate 5, for example, by applying an inorganic adhesive, a colloidal solution, a pre-ceramic polymer, a brazing material or the like, or by forming a plating membrane. Then, on the second bonding layer, the insulating porous layer 3 is formed by such a method as described above, the first bonding layer 4a is formed similarly to the second bonding layer 4b, and then the surface dense layer 2 can be formed by such a method as described above.

Alternatively, the heat-insulating member 1 can be manufactured as follows. A ceramic raw material is formed to obtain a formed body which becomes the substrate 5, and layers which become the insulating porous layer 3 and the surface dense layer 2 are formed on the non-fired formed body, and integrally sintered, so that the heat-insulating member 1 can be manufactured. Furthermore, a formed body which becomes the substrate 5 is formed, a layer which becomes the insulating porous layer 3 is formed on the unfired formed body and integrally sintered, and then a layer which becomes the surface dense layer 2 is formed and further sintered, so that the heat-insulating member 1 can be manufactured.

### Examples

Hereinafter, the present invention will be described in more detail on the basis of examples, but the present invention is not limited to these examples.

### (Example 1)

A piston substrate having such a shape as shown in Fig. 2 was prepared by aluminum die casting.

To enable fixing to this piston substrate by a screw, a piston head (a substrate 5) made of a ceramic material and having a concave portion 5a and a screw hole 5b on a back side was prepared as follows. First, there was prepared a slurry including cordierite powder, a dispersing agent, a gelling agent, a reaction catalyst, and an organic dispersing medium. This slurry was poured into a mold at room temperature, and left to stand. Afterward, solidification was proceeded at 40°C, and the solidified slurry was released from the mold. Furthermore, the solidified slurry was left to stand at room temperature and then at 90°C to obtain a formed body. The formed body was fired at 1430°C to obtain the dense piston head (the substrate 5) made of cordierite.

Next, insulating membranes (surface dense layer 2 and insulating porous layer 3) were formed on the surface of the piston head as follows. First, there was prepared a slurry (for the insulating porous layer 3) including cordierite powder, latex particles as a pore former, a dispersing agent, a binder and water, and this slurry was applied to the surface (the upper surface) of the above piston head, and dried at room temperature and then at 90°C. Next, there was prepared a slurry (for the surface dense layer 2) including cordierite powder, a dispersing agent, a binder and water, and this slurry was applied to the surface (the upper surface) of the above piston head, and dried at room temperature and then at 90°C. This was fired at 1380°C to form the insulating membranes on the surface of the piston head made of cordierite, so that a heat-insulating member 1 was obtained.

The heat-insulating member 1 was joined to the piston substrate by the screw, and piston rings 14r were also disposed to obtain the piston 14.

### (Example 2)

The procedures of Example 1 were repeated to prepare a piston substrate having such a shape as shown in Fig. 2.

A piston head (a substrate 5) made of a ceramic material and having a shape similar to that of Example 1 was prepared as follows. First, there was prepared a slurry including zirconia powder, a dispersing agent, a gelling agent, a reaction catalyst and an organic dispersing medium. This slurry was poured into a mold at room temperature, and left to stand. Afterward, solidification was proceeded at 40°C, and the solidified slurry was released from the mold. Furthermore, the solidified slurry was left to stand at room temperature and then at 90°C to obtain a formed body. This body was fired at 1400°C to obtain the dense piston head (the substrate 5) made of zirconia.

Next, insulating membranes (a surface dense layer 2 and an insulating porous layer 3) were formed on the surface of the piston head as follows. First, there was prepared a slurry (for the insulating porous layer 3) including zirconia powder, melamine resin particles as a pore former, a dispersing agent, a binder and water, and this slurry was applied to the surface (the upper surface) of the above piston head and dried at room temperature and then at 90°C. Next, there was prepared a slurry (for the surface dense layer 2) including zirconia powder, a dispersing agent, a binder and water, and this slurry was applied to the surface (the upper surface) of the above piston head and dried at room temperature and then at 90°C. This was fired at 1400°C to form the insulating membranes on the surface of the piston head made of zirconia, so that a heat-insulating member 1 was obtained.

The heat-insulating member 1 was joined to the piston substrate by the screw, and piston rings 14r were also disposed to obtain a piston 14.

### (Comparative Example 1)

Comparative Example 1 was similar to Examples 1 and 2, but there was obtained a piston 14 using a piston head (a substrate 5 only) on which no insulating membrane was formed.

### (Effect)

When flame of a gas burner was brought close to the surface (the side on which the piston head was present) of a piston 14 of each of Examples 1 and 2 and Comparative Example 1, and a temperature of the back side (the vicinity of the screw head) of the piston 14 was measured. The temperature of each of Examples 1 and 2 was lower than the temperature of Comparative Example 1. Therefore, due to the presence of the insulating membranes, heat-insulating performance was improved.

Additionally, an attempt was made to form an insulating porous membrane of cordierite on the surface of the piston head obtained by aluminum die casting. However, when a slurry of cordierite was applied and fired at 1380°C, the slurry reacted with the piston head and it was not possible to form the membrane, and even when the slurry was fired at 500°C at which the reaction does not take place, it was not possible to form the membrane. Therefore, when a substrate 5 formed of a ceramic material is not present, it is difficult to form insulating membranes (a surface dense layer 2 and an insulating porous layer 3) formed of the ceramic material.

### Industrial Applicability

The structure of a combustion chamber for an engine of the present invention can be applied to the engine of a car or the like.

### Description of Reference Numerals

1: heat-insulating member, 2: surface dense layer, 3: insulating porous layer, 4: bonding layer, 4a: first bonding layer, 4b: second bonding layer, 5: substrate, 5a: concave portion, 5b: screw hole, 8: screw, 10: engine, 11: cylinder block, 12: cylinder, 13: cylinder head, 13s: bottom surface, 14: piston, 14r: piston ring, 14s: upper surface (of the piston), 15: ignition plug, 16: suction valve, 16s: valve head, 17: exhaust valve, 17s: valve head, 18: suction passage, 19: exhaust passage, 20: engine combustion chamber, and 21: engine constituting member.

## Claims

1. A heat-insulating member comprising:
a substrate formed of a ceramic material;
an insulating porous layer formed of a ceramic material on the surface of the substrate; and
a surface dense layer formed of a ceramic material on the surface of the insulating porous layer,
wherein the surface dense layer has a porosity of 5% or less, and
the insulating porous layer has a larger porosity than the surface dense layer.

2. The heat-insulating member according to claim 1, wherein the insulating porous layer and the substrate are formed of the ceramic material of a same composition or a similar composition.

3. The heat-insulating member according to claim 1 or 2,
wherein the insulating porous layer has pores of sizes of a nano-order.

4. The heat-insulating member according to any one of claims 1 to 3,
wherein in the surface dense layer, a reflectance at a wavelength of 1.5 µm is larger than 0.5.

5. The heat-insulating member according to any one of claims 1 to 4,
wherein in the surface dense layer, a radiation rate at a wavelength of 2.5 µm is larger than 0.5.

6. The heat-insulating member according to any one of claims 1 to 5,
wherein the surface dense layer has a thickness of 20 µm or less.

7. The heat-insulating member according to any one of claims 1 to 6,
wherein the insulating porous layer has a heat conductivity of 1 W/(m·K) or less.

8. The heat-insulating member according to any one of claims 1 to 7,
wherein the insulating porous layer has a heat capacity of 2000 kJ/(m³·K) or less.

9. The heat-insulating member according to any one of claims 1 to 8,
wherein the insulating porous layer has a thickness of 10 µm to 1 mm.

10. The heat-insulating member according to any one of claims 1 to 9,
wherein the substrate has a thickness of 1 to 30 mm.

11. The heat-insulating member according to any one of claims 1 to 10,
wherein the substrate has a four-point bending strength of 20 MPa or more.

12. The heat-insulating member according to any one of claims 1 to 11,
which has a first bonding layer between the insulating porous layer and the surface dense layer.

13. The heat-insulating member according to any one of claims 1 to 12,
which has a second bonding layer between the substrate and the insulating porous layer.

14. A structure of a combustion chamber for an engine, comprising:
the heat-insulating member according to any one of claims 1 to 13 on the surface of an engine constituting member constituting the engine combustion chamber.

15. The structure of the combustion chamber for the engine according to claim 14,
wherein the heat-insulating member is provided on the surface of at least one of a piston, a valve head, and a cylinder head.

16. The structure of the combustion chamber for the engine according to claim 14 or 15,
wherein the heat-insulating member is fixed to the surface of the engine constituting member constituting the engine combustion chamber by mechanical fixing or chemical fixing.

17. The structure of the combustion chamber for the engine according to claim 16,
wherein the mechanical fixing is screwing or fitting.

18. The structure of the combustion chamber for the engine according to claim 16,
wherein the chemical fixing is brazing.
